# EUROPÄISCHE PATENTSCHRIFT

(11) **EP 3 118 041 B1**
(45) Veröffentlichungstag und Bekanntmachung des Hinweises auf die Patenterteilung: **27.06.2018**
(21) Anmeldenummer: 15177009.6
(22) Anmeldetag: 16.07.2015
(51) Int. Cl.: B60K 15/035, B60K 15/04, B60K 15/03

(54) **VERBESSERTE STRÖMUNGSLEITEINRICHTUNG FÜR EINEN TANKEINFÜLLSTUTZEN**
IMPROVED FLOW CONTROL DEVICE FOR A TANK FILLER NECK
ÉLEMENT AMELIORE ORIENTANT L'ECOULEMENT POUR UN MANCHON DE REMPLISSAGE DE RESERVOIR

(43) Veröffentlichungstag der Anmeldung: 18.01.2017
(73) Patentinhaber: Magna Steyr Fuel Systems GesmbH, 8261 Sinabelkirchen (AT)
(72) Erfinder: HENDLER, René, 8020 Graz (AT)
(74) Vertreter: Zangger, Bernd

(56) Entgegenhaltungen:
- EP-A1- 0 636 505
- EP-A1- 2 719 567
- EP-A1- 2 789 490
- DE-A1- 2 452 248
- DE-A1- 10 017 323
- DE-A1-102013 110 828
- DE-U1- 29 502 114
- US-A- 4 908 130

## Beschreibung

### TECHNISCHES GEBIET

Die Erfindung betrifft eine Strömungsleiteinrichtung für einen Tankeinfüllstutzen. Weiterhin betrifft die Erfindung einen Tankeinfüllstutzen für ein Kraftfahrzeug, welcher ein Füllrohr umfasst, einen das Füllrohr an dessen Ende umschließenden Einfüllkopf, eine zwischen dem Füllrohr und dem Einfüllkopf angeordnete Dichtung aus einem Elastomer sowie eine in dem Füllrohr oder dem Einfüllkopf angeordnete Strömungsleiteinrichtung der genannten Art. Schließlich betrifft die Erfindung auch ein Kraftfahrzeug mit einem Tankeinfüllstutzen der genannten Art.

### STAND DER TECHNIK

Eine Strömungsleiteinrichtung der genannten Art ist aus dem Stand der Technik grundsätzlich bekannt. Beispielsweise offenbart die DE 20 2011 109 524 U1 dazu eine Füllrohranordnung für einen Tank eines Kraftfahrzeugs mit einem Tauchrohr, das in den Tank reicht, und mit einem innerhalb eines Zugangsbereichs der Füllrohranordnung angeordneten Führungselement für ein Auslaufrohr einer Zapfpistole sowie mit einem Deckelverschlussteil, an dem das Führungselement gehalten ist.

Weiterhin offenbart die DE 10 2008 054 247 A1 einen Kraftstofftank für ein Kraftfahrzeug mit einem Einfüllstutzen, der einen im Tank angeordneten flexiblen Schlauch umfasst, der sich bis zum inneren Tankboden hin erstreckt und am freien unteren Ende eine dem inneren Tankboden zugerichtete axiale Ausmündungsöffnung aufweist.

Das Dokument EP 2 789 490 A1 beschreibt beispielsweise einen Befüllkopf für einen Flüssigkeitstank, wobei der Befüllkopf einen Einfüllstutzen für ein Zapfventil aufweist. Der Einfüllstutzen umfasst ein erstes Gehäuseteil mit einem ersten Einfüllstutzenabschnitt und ein zweites Gehäuseteil mit einem zweiten Einfüllstutzenabschnitt, ein Dichtelement zwischen dem ersten und dem zweiten Einfüllstutzenabschnitt und ein Magnetelement, das mit dem Dichtelement mechanisch verbunden ist.

Auch das Dokument EP 2 719 567 A1, in dem die Merkmale des Oberbegriffs von Anspruch 1 offenbart sind, beschäftigt sich mit einem Befüllkopf für einen Flüssigkeitstank in einem Kraftfahrzeug. Der Befüllkopf weist einen zusammengesetzten Tauchrohrformkörper im Inneren des Befüllkopfes auf, mit einem ersten Formkörperteil zum Bilden eines Einfüllstutzens für eine Befülldüse und mit einem zweiten Formkörperteil zum Formen eines Flüssigkeitsstrahls der Befülldüse, das an dem ersten Formkörperteil befestigt ist.

Das Schriftstück EP 0 636 505 A1, in dem ebenfalls die Merkmale des Oberbegriffs von Anspruch 1 enthalten sind, offenbart ebenso eine Befüllungseinheit für einen Kraftstofftank eines Kraftfahrzeugs. Nach dem Stand der Technik ist das Führungselement respektive die Strömungsleiteinrichtung (englisch "flowguide") aus Kunststoff (zum Beispiel aus Polyacetal, kurz POM, oder aus High Density Polyethylene, kurz HDPE) sowie aus Metall gefertigt, wodurch die erhaltenen Bauteile relativ starr sind. Die Toleranzen der einzelnen Bauteile eines Tankeinfüllstutzens sind daher relativ eng gewählt, um eine reibungslose Montage der Bauteile gewährleisten zu können. Allerdings ist vor allem der Herstellungsprozess (Blasprozess) für das aus Kunststoff bestehende Füllrohr schwer steuerbar und vor allem die Innengeometrie des Füllrohrs schwer reproduzierbar. Im Gegensatz zu der postulierten Forderung weist das Füllrohr somit sehr große Toleranzen auf, wodurch der Zusammenbau der Bauteile eines Tankeinfüllstutzens erschwert wird. Ein weiterer Nachteil der bekannten Tankeinfüllstutzen besteht darin, dass die Bauteile praktisch nicht typübergreifend verwendet werden können, gegebenenfalls mit Ausnahme des Einfüllkopfs und des Dichtrings. Das Füllrohr und die Strömungsleiteinrichtungen müssen aber in aller Regel an die Gegebenheiten des jeweiligen Fahrzeugs angepasst werden.

### OFFENBARUNG DER ERFINDUNG

Eine Aufgabe der Erfindung ist es daher, eine verbesserte Strömungsleiteinrichtung, einen verbesserten Tankeinfüllstutzen und ein verbessertes Kraftfahrzeug anzugeben. Insbesondere soll der Zusammenbau der einzelnen Bestandteile eines Tankeinfüllstutzens erleichtert werden. Nach Möglichkeit sollen darüber hinaus mehr Bauteile als bisher typübergreifend eingesetzt werden können.

Die Aufgabe der Erfindung wird mit einer Strömungsleiteinrichtung der eingangs genannten Art gelöst, welche zumindest teilweise aus einem Elastomer oder einem thermoplastischem Elastomer besteht. Beispielsweise kann als Elastomer Nitrilkautschuk (NBR), Fluorkarbon-Kautschuk (FKM) oder Fluorsilikon (FVMQ) eingesetzt werden.

Erfindungsgemäß ist die Strömungsleiteinrichtung mehrteilig aufgebaut und weist einen Strömungsleitstutzen und ein damit verbundenes Strömungsleitrohr auf. Auf diese Weise kann für jeden Teil der Strömungsleiteinrichtung respektive jede Funktion derselben ein passendes Material gewählt werden.

Entsprechend der vorliegenden Erfindung besteht das Strömungsleitrohr aus einem Elastomer oder einem thermoplastischem Elastomer und der Strömungsleitstutzen aus einem Thermoplast oder Duroplast. Auf diese Weise ist einerseits ein guter Sitz der Strömungsleiteinrichtung im Füllrohr/Einfüllkopf gegeben, andererseits kann sich das Strömungsleitrohr gut dem Verlauf des Füllrohrs anpassen.

Die Aufgabe der Erfindung wird auch mit einem Tankeinfüllstutzen der eingangs genannten Art gelöst, welcher eine in dem Füllrohr und/oder dem Einfüllkopf angeordnete Strömungsleiteinrichtung der oben genannten Art aufweist. Vorteilhaft besteht das Füllrohr aus Kunststoff und ist insbesondere als Kunststoff-Blasrohr ausgebildet, und vorteilhaft ist die Strömungsleiteinrichtung kürzer ausgebildet als das Füllrohr. Der Einfüllkopf besteht vorzugsweise aus Metall.

Schließlich wird die Aufgabe der Erfindung auch durch ein Kraftfahrzeug gelöst, das einen Tankeinfüllstutzen der oben genannten Art umfasst.

Durch die Flexibilität des gewählten Materials kann sich die Strömungsleiteinrichtung besser an unterschiedliche Einbausituationen anpassen, was vor allem die breite Streuung der Innengeometrie der verwendeten Füllrohre betrifft. Dadurch wird der Zusammenbau eines Tankeinfüllstutzens wesentlich erleichtert. Durch die angegebene Materialauswahl kann ein und dieselbe Strömungsleiteinrichtung auch typübergreifend für verschiedene Tankeinfüllstutzen eingesetzt werden.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn der Strömungsleitstutzen und das Strömungsleitrohr lösbar miteinander verbunden sind, insbesondere mit Hilfe einer Rastverbindung. Auf diese Weise können der Strömungsleitstutzen und das Strömungsleitrohr leicht verbunden werden und können dennoch aus (völlig) unterschiedlichen Materialien bestehen.

Günstig ist es aber auch, wenn der Strömungsleitstutzen und das Strömungsleitrohr unlösbar miteinander verbunden sind, insbesondere miteinander verschweißt sind. Dadurch ergibt sich wiederum eine geringe Anzahl an Bauteilen für einen Tankeinfüllstutzen, was dessen Zusammenbau vereinfacht. Im Speziellen können der Strömungsleitstutzen und das Strömungsleitrohr miteinander verschweißt sein, wenn diese aus thermoplastischem Elastomer gefertigt sind, oder durch Vulkanisation miteinander verbunden sein, wenn der Strömungsleitstutzen und das Strömungsleitrohr aus einem Elastomer bestehen.

Die obigen Ausgestaltungen und Weiterbildungen der Erfindung lassen sich, gemäß der Ansprüche, auf beliebige Art und Weise kombinieren.

### KURZE BESCHREIBUNG DER FIGUREN

Die vorliegende Erfindung wird nachfolgend anhand des in der schematischen Figur der Zeichnung angegebenen Ausführungsbeispiels näher erläutert. Es zeigt dabei:

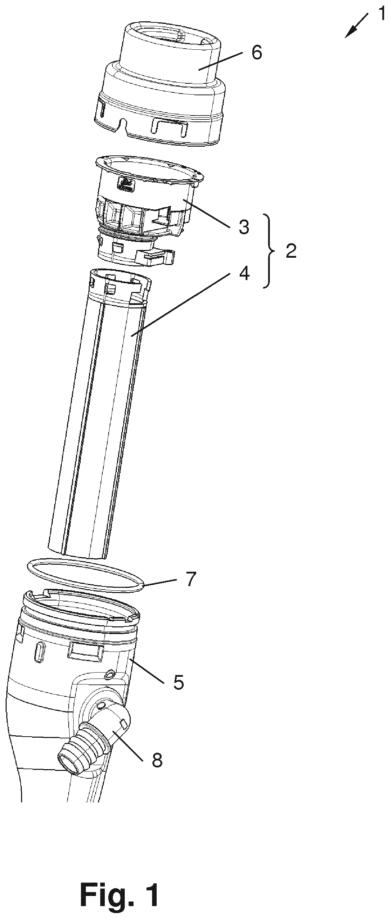

- Figur 1: eine beispielhaften Tankeinfüllstutzen für ein Kraftfahrzeug in Explosionsdarstellung.

### DETAILIERTE BESCHREIBUNG DER ERFINDUNG

Fig. 1 zeigt einen Tankeinfüllstutzen 1 für ein Kraftfahrzeug in Explosionsdarstellung, welcher eine Strömungsleiteinrichtung 2 mit einem Strömungsleitstutzen 3 und einem damit verbundenen Strömungsleitrohr 4 aufweist. Zudem umfasst der Tankeinfüllstutzen 1 ein Füllrohr 5 aus Kunststoff, einen das Füllrohr 5 an dessen Ende umschließenden Einfüllkopf 6 aus Metall, sowie eine zwischen dem Füllrohr 5 und dem Einfüllkopf 6 angeordnete Dichtung 7 aus einem Elastomer. In an sich bekannter Weise wird beim Betankungsvorgang Kraftstoff über den Einfüllkopf 6 zugeführt, welcher über das Füllrohr 5 in einen nicht dargestellten Tank fließt. Damit es nicht zu einem Rückschlagen und Herausspritzen des Kraftstoffs kommt, ist die Strömungsleiteinrichtung 2 vorgesehen.

In dem in der Fig. 1 dargestellten Beispiel ist die Strömungsleiteinrichtung 2 mehrteilig aufgebaut und besteht, wie bereits erwähnt, aus dem Strömungsleitstutzen 3 und dem damit verbundenen Strömungsleitrohr 4. Der Strömungsleitstutzen 3 dient unter anderem der Befestigung der Strömungsleiteinrichtung 2 im Füllrohr 5 respektive im Einfüllkopf 6 und weist auch an sich bekannte Mittel auf, welche ein Rückschlagen und Herausspritzen des Kraftstoffs verhindern. Das Strömungsleitrohr 5 dient der weiteren Führung des Kraftstoffs und ist insbesondere bis nach dem Entlüftungsventil 8 geführt. Vorteilhaft ist die Strömungsleiteinrichtung 2 jedoch kürzer ausgebildet als das zu einem nicht dargestellten Kraftstofftank führende Füllrohr 5.

Wenigstens einer der beiden Teile 3 und 4 besteht aus einem Elastomer oder einem thermoplastischem Elastomer. Beispielweise kann das Strömungsleitrohr 4 aus einem Elastomer oder einem thermoplastischem Elastomer bestehen, wohingegen der Strömungsleitstutzen 3 aus einem Thermoplast oder Duroplast besteht. Auf diese Weise ist ein guter Sitz der Strömungsleiteinrichtung 2 im Füllrohr 5 respektive im Einfüllkopf 6 gegeben. Weiterhin kann sich das Strömungsleitrohr 4 gut dem Verlauf des Füllrohrs 5 anpassen. Denkbar ist insbesondere aber auch, dass beide Teile 4 aus einem Elastomer oder einem thermoplastischem Elastomer bestehen. Als Elastomer kann generell Nitrilkautschuk (NBR), Fluorkarbon-Kautschuk (FKM) oder Fluorsilikon (FVMQ) vorgesehen sein.

In dem dargestellten Beispiel sind der Strömungsleitstutzen 3 und das Strömungsleitrohr 4 lösbar miteinander verbunden, konkret mit Hilfe einer Rastverbindung. Die beiden Teile 3 und 4 könnten aber auch auf andere Weise miteinander verbunden sein. Insbesondere ist denkbar, dass der Strömungsleitstutzen 3 und das Strömungsleitrohr 4 unlösbar miteinander verbunden sind. Im Speziellen könnten die beiden Teile 3 und 4 miteinander verschweißt sein, wenn diese aus thermoplastischem Elastomer gefertigt sind, oder durch Vulkanisation miteinander verbunden sein, wenn die Teile 3 und 4 aus einem Elastomer bestehen. Denkbar ist aber auch, dass die Strömungsleiteinrichtung 3 überhaupt einteilig aufgebaut ist und zur Gänze aus einem Elastomer oder einem thermoplastischem Elastomer besteht.

Abschließend wird festgehalten, dass die Bestandteile in der Figur ggf. nicht maßstabsgetreu dargestellt sind. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen. Weiterhin wird angemerkt, dass der dargestellte Tankeinfüllstutzen 1 respektive die dargestellte Strömungsleiteinrichtung 2 selbstverständlich mehr oder weniger Komponenten als dargestellt aufweisen können, ohne dass dadurch der Grundgedanke der vorliegenden Erfindung, gemäß der Ansprüche, verlassen werden würde.

## Patentansprüche

1. Strömungsleiteinrichtung (2) für einen Tankeinfüllstutzen (1), wobei die Strömungsleiteinrichtung (2) mehrteilig aufgebaut ist und einen Strömungsleitstutzen (3) und ein damit verbundenes Strömungsleitrohr (4) aufweist,
**dadurch gekennzeichnet, dass**
die Strömungsleiteinrichtung (2) zumindest teilweise aus einem Elastomer oder einem thermoplastischem Elastomer besteht, nämlich das Strömungsleitrohr (4) aus einem Elastomer oder einem thermoplastischem Elastomer und der Strömungsleitstutzen (3) aus einem Thermoplast oder Duroplast besteht.

2. Strömungsleiteinrichtung (2) nach Anspruch 1, **dadurch gekennzeichnet, dass** der Strömungsleitstutzen (3) und das Strömungsleitrohr (4) lösbar miteinander verbunden sind.

3. Strömungsleiteinrichtung (2) nach Anspruch 1, **dadurch gekennzeichnet, dass** der Strömungsleitstutzen (3) und das Strömungsleitrohr (4) unlösbar miteinander verbunden sind.

4. Strömungsleiteinrichtung (2) nach einem der Ansprüche 1 bis 3, **dadurch gekennzeichnet, dass** als Elastomer Nitrilkautschuk, Fluorkarbon-Kautschuk oder Fluorsilikon vorgesehen ist.

5. Tankeinfüllstutzen (1) für ein Kraftfahrzeug, umfassend
- ein Füllrohr (5),
- einen das Füllrohr (5) an dessen Ende umschließenden Einfüllkopf (6) und
- eine zwischen dem Füllrohr (5) und dem Einfüllkopf (6) angeordnete Dichtung (7) aus einem Elastomer,
**gekennzeichnet durch**
- eine in dem Füllrohr (5) und/oder dem Einfüllkopf (6) angeordnete Strömungsleiteinrichtung (2) nach einem der Ansprüche 1 bis 4.

6. Tankeinfüllstutzen (1) nach Anspruch 5, **dadurch gekennzeichnet, dass** die Strömungsleiteinrichtung (2) kürzer ausgebildet ist als das ein Füllrohr (5).

7. Kraftfahrzeug, **gekennzeichnet durch** einen Tankeinfüllstutzen (1) nach Anspruch 5 oder 6.

## Claims

1. Flow guide (2) for a tank filler neck (1), wherein the flow guide (2) is of multi-part construction and has a flow guiding stub (3) and a flow guiding tube (4) connected thereto,
**characterized in that** the flow guide (2) is composed at least partially of an elastomer or of a thermoplastic elastomer, namely the flow guiding tube (4) is composed of an elastomer or of a thermoplastic elastomer, and the flow guiding stub (3) is composed of a thermoplastic or of a thermoset.

2. Flow guide (2) according to Claim 1, **characterized in that** the flow guiding stub (3) and the flow guiding tube (4) are connected releasably to one another.

3. Flow guide (2) according to Claim 1, **characterized in that** the flow guiding stub (3) and the flow guiding tube (4) are connected non-releasably to one another.

4. Flow guide (2) according to one of Claims 1 to 3, **characterized in that** nitrile rubber, fluorocarbon rubber or fluorosilicone is provided as the elastomer.

5. Tank filler neck (1) for a motor vehicle, comprising
- a filling tube (5),
- a filler head (6) surrounding the filling tube (5) at the end thereof, and
- a seal (7) composed of elastomer arranged between the filling tube (5) and the filler head (6), **characterized by**
- a flow guide (2) according to one of Claims 1 to 4 arranged in the filling tube (5) and/or the filler head (6) .

6. Tank filler neck (1) according to Claim 5, **characterized in that** the flow guide (2) is designed to be shorter than a filling tube (5).

7. Motor vehicle, **characterized by** a tank filler neck (1) according to Claim 5 or 6.

## Revendications

1. Dispositif d'orientation d'écoulement (2) pour un manchon de remplissage de réservoir (1), dans lequel le dispositif d'orientation d'écoulement (2) est réalisé en plusieurs parties et présente un manchon d'orientation d'écoulement (3) et un tube d'orientation d'écoulement (4) raccordé à celui-ci, **caractérisé en ce que** le dispositif d'orientation d'écoulement (2) se compose au moins en partie d'un élastomère ou d'un élastomère thermoplastique, à savoir **en ce que** le tube d'orientation d'écoulement (4) se compose d'un élastomère ou d'un élastomère thermoplastique et le manchon d'orientation d'écoulement (3) se compose d'un thermoplastique ou d'un thermodurcissable.

2. Dispositif d'orientation d'écoulement (2) selon la revendication 1, **caractérisé en ce que** le manchon d'orientation d'écoulement (3) et le tube d'orientation d'écoulement (4) sont raccordés l'un à l'autre de façon séparable.

3. Dispositif d'orientation d'écoulement (2) selon la revendication 1, **caractérisé en ce que** le manchon d'orientation d'écoulement (3) et le tube d'orientation d'écoulement (4) sont raccordés l'un à l'autre de façon inséparable.

4. Dispositif d'orientation d'écoulement (2) selon l'une quelconque des revendications 1 à 3, **caractérisé en ce qu'**il est prévu comme élastomère du caoutchouc nitrile, du caoutchouc fluorocarbone ou du fluorosilicone.

5. Manchon de remplissage de réservoir (1) pour un véhicule automobile, comprenant:
- un tube de remplissage (5),
- une tête de remplissage (6) entourant le tube de remplissage (5) à son extrémité, et
- un joint d'étanchéité (7) en un élastomère disposé entre le tube de remplissage (5) et la tête de remplissage (6),
**caractérisé par**
- un dispositif d'orientation d'écoulement (2) selon l'une quelconque des revendications 1 à 4, disposé dans le tube de remplissage (5) et/ou dans la tête de remplissage (6).

6. Manchon d'orientation d'écoulement (1) selon la revendication 5, **caractérisé en ce que** le dispositif d'orientation d'écoulement (2) est plus court que le tube de remplissage (5).

7. Véhicule automobile, **caractérisé par** un manchon d'orientation d'écoulement (1) selon la revendication 5 ou 6.
